# EUROPEAN PATENT SPECIFICATION

(11) **EP 3 854 609 B1**
(45) Date of publication and mention of the grant of the patent: **12.07.2023**
(21) Application number: 20154566.2
(22) Date of filing: 30.01.2020
(51) Int. Cl.: B60C 9/22, B60C 9/00, D02G 3/48, B60C 1/00

(54) **A TEXTILE CORD AND A TIRE COMPRISING A TEXTILE CORD REINFORCEMENT**
TEXTILKORD UND REIFEN MIT EINER TEXTILKORDVERSTÄRKUNG
CORDON TEXTILE ET PNEU COMPRENANT UN RENFORT DE CORDON TEXTILE

(30) Priority: 24.01.2020 US 202062965419 P
(43) Date of publication of application: 28.07.2021
(73) Proprietor: The Goodyear Tire & Rubber Company, Akron, OH 44316 (US); Kordsa Teknik Tekstil A.S, 41310 Izmit / Kocaeli (TR)
(72) Inventor: BECK, Raphael, L-8558 Reichlange (LU); VAN ECK, Dirk Lothar Maria, D-63110 Rodgau (DE); DURAND, Olivier Marcel Eugène, F-03410 Domerat (FR); MONTET, Sébastien, L-9171 Michelau (LU); BARRETT, Gary Terence, Sutton Coldfield, West Midlands B73 5LZ (GB); FIDAN, Mehmet Saadettin, 41310 Izmit/ Kocaeli (TR); ÖZCAN, Hazal, 41310 Izmit/ Kocaeli (TR); GÜL, Neslihan, 41310 Izmit/ Kocaeli (TR)
(74) Representative: Kutsch, Bernd

(56) References cited:
- WO-A1-2010/143017
- US-A- 3 638 706
- US-A- 4 989 658
- US-A1- 2018 022 159
- US-A1- 2018 186 185
- BERRIN YILMAZ: "Investigation of twisted monofilament cord properties made of nylon 6.6 and polyester", FIBERS AND POLYMERS, THE KOREAN FIBER SOCIETY, HEIDELBERG, vol. 12, no. 8, 7 December 2011 (2011-12-07), pages 1091-1098, XP019988056, ISSN: 1875-0052, DOI: 10.1007/S12221-011-1091-3

## Description

### Field of the invention

The present invention is directed to a tire comprising a textile cord reinforcement, in particular in a ply or ply strip, such as an overlay ply strip. Moreover, the present invention is directed to a corresponding cord.

### Background

While tire performance has significantly improved over the past decades, the demands of customers have increased as well, especially in the field of race tires. In particular, increasing requirements in the Ultra Ultra High Performance (UUHP) segment are showing the limits of current overlay reinforcing materials which cover belt plies of the tire. Increasing demands are for instance found in high speed performance, durability and/or handling. Preferable cords which may help to achieve acceptable properties, in particular in overlay plies or ply strips are for instance known from United States Patent Application Publication No. 2004/0118499 A1 which discloses a pneumatic tire having an overlay strip comprising hybrid cords consisting of aramid yarn and a Nylon yarn twisted together to form a cord. While such solutions have helped to increase performance of race tires in the past, there is still significant room for improvement left.

United States Patent 3,638,706 discloses a pneumatic tire reinforcing element comprising a single bundle of continuous macrofilaments of synthetic polymeric material selected from the group consisting of polyester and polyamide. Each microfilament has a denier in the range of 100 to 1500 and the bundle has a total denier of 1000 to 10000 as well as a twist level not exceeding 4 turns per inch. In an example, the denier is in the range of 400 to 600 and the yarn has about 2 turns per inch.

United States Patent Application US 2018/0022159 A1 discloses a radial tire for a passenger vehicle or van, which has a very thin belt structure comprising a multilayer composite laminate of specific construction with a first layer of rubber reinforced by circumferential textile reinforcers in the form of monofilaments or assemblies of monofilaments, preferably of polyester. This first layer radially surmounts two other layers of rubber reinforced by high strength steel monofilaments.

The scientific journal "Fibers and Polymers" of 2011, Vol. 12, No. 8 discloses in 1091-1098 the article "Investigation of Twisted Monofilament Cord Properties Made of Nylon 6.6 and Polyester" polymeric materials with reinforcing synthetic yarns for tires, particularly including Nylon 6.6 and Polyester. US4989658 discloses a tire overlay ply strip comprising a cord comprising two nylon monofilaments being twisted together with one another.

### Summary of the invention

A first object of the invention may be to provide cords or a tire comprising cords in a reinforced ply or ply strip which support improvements in one or more of the following tire properties: high speed, durability, cornering force, and ride and handling.

Another object of the invention may be to provide a tire comprising an improved tire overlay textile reinforcement.

Another object of the invention may be to provide an improved race or passenger car tire.

The present invention is defined by the scope of claim 1. Further preferred embodiments are defined by the dependent claims or the summary and description hereinbelow.

In a first aspect of the invention, an overlay ply strip is provided, which comprises a (textile) cord, the cord comprising from 6 to 10 polyamide monofilament plies (or just monofilaments) having each a density from 300 to 470 dtex, wherein the monofilament plies are twisted together by between 1 and 2 twists per 2.54 cm to form the cord. This cord construction has turned out to be of particular interest for race car applications which shall also be covered by the present field of passenger car tires. Amongst others, such a cord has a high bending stiffness, in particular in comparison with multifilament cords. The same applies to flex-fatigue resistance. It has also shown improvements in cornering stiffness which helps to reduce lap times for racing cars having tires equipped with such technology. Twist levels which are higher than the claimed range have been found to result in high internal torques which cause a non-uniform cord distribution leading to variable cord-to-cord distances (rivet), thus facilitating crack initiation and ply separation and thereby impairing tire durability. Apart from that higher twist levels result in a drop of breaking strength and modulus which negatively affect ply strength and stiffness leading to reduction in tire performance. If in contrast the twist levels are lower than the desired range, under compression, the low twist cord is subjected to cord-ply separation (bird-cage formation) leading to a cord-to-cord contact and potential cord breaking.

In an embodiment, the cord comprises from 7 to 9 monofilament plies. Such a relatively high number of monofilament plies has turned out to be desirable, giving for instance more stiffness (especially bending stiffness) to the construction. 7 monofilament plies may be of particular interest due to the compact and relatively symmetric construction. Monofilament plies may have an essentially circular or a circular cross section.

In another embodiment, each monofilament ply has a linear density from 400 to 460 dtex. Cords with ply linear densities lower than 400 dtex have more limited bending stiffness, and linear densities higher than 460 are deemed less suitable from the viewpoint of fatigue resistance.

In yet another embodiment, the monofilament plies are twisted together with 1 to 1.5 twists per 2.54 cm (twists per inch or tpi). They may also be twisted together with less than 1.4 twists per 2.54 cm. Apart from the above mentioned considerations resulting in relatively narrow twist ranges, such cords with low twist level are particularly suitable for an advanced adhesive dip penetration into the monofilament bundle. Such a dip penetration improves flex fatigue resistance of the cords.

In an embodiment, the polyamide material may be Nylon, optionally Nylon 6.6.

In another embodiment, the diameter of a monofilament ply is between 0.15 mm and 0.3 mm, preferably between 0.2 mm and 0.23 mm. This range further optimizes the fatigue resistance and bending stiffness.

In still another embodiment, the maximum diameter of the cord is less than 0.7 mm, preferably from 0.62 to 0.68 mm. In particular, such a maximum value enables weight and rolling resistance reduction.

In still another embodiment, the cord is coated with an adhesive, optionally with a resorcinol-formaldehyde-latex (RFL) adhesive. Such an adhesive may improve the connection, respectively adhesion, between the cords and the rubber matrix.

In yet another embodiment, the cord has a construction of 460/7 dtex Nylon with 1.1 to 1.4 twists per 2.54 cm, optionally about 1.3 twists per 2.54 cm. Such a construction has been identified as one preferred example.

In general, multiple of the embodiments, or features thereof as mentioned herein, may be combined with one another.

In another aspect of the invention, a passenger car tire is provided, the tire having a carcass comprising at least one carcass ply; a tread disposed radially outward of a crown region of the carcass; a belt with a plurality of belt plies arranged between the carcass and the tread; an overlay structure covering the belt and comprising a helically wound overlay ply strip reinforced by said cord or one or more of its embodiments. In particular, the strip could be a jointless band (JLB) strip with parallel cords. The term monofilament ply may be understood herein as a ply consisting of one monofilament, i.e. a monofilament.

In an embodiment, the tire is type approved, designed or certified to drive faster than 300 km/h or has a speed index of "W", "Y" or "(Y)".

In another embodiment, the tire is a slick or semi slick tire.

In another embodiment, the tire has a size of within the following range: 285-350/50-80, 17-22 inch, such as 305/68 R18 or 310/71 R18.

In another embodiment, the tire is a pneumatic tire.

In still another embodiment, the overlay ply strip extends over the belt plies at an angle of between 0 and 5 degrees with the equatorial plane of the tire. Such a strip has turned out to be a preferred way to build the overlay for passenger car or race tires as described herein.

In yet another embodiment, the tire has a ply or ply strip comprising a plurality of the cords with between 10 and 50 ends per 2.54 cm (ends per inch or epi), optionally between 20 and 40 ends per 2.54 cm or even more preferably between 25 and 35 ends per 2.54 cm. In other words, an end can be considered as a cord end. Anyhow, that manner of notation is known to the person skilled in the tire art. The cords are typically arranged in parallel, preferably in a plane beside one another in the strip. The number or density of ends per 2.54 cm is measured perpendicular to the extension of the cords and/or the strip as known to the person skilled in the art.

In another embodiment, said strip has one or more of: a width (w) in the range of 5 mm to 20 mm, preferably between 5 mm and 16 mm, a thickness (t) in the range of 0.4 mm to 5 mm, preferably between 0.6 mm and 5 mm or even 0.6 mm to 1 mm.

In still another embodiment, the tire is a pneumatic race car tire.

In general, the features of the above mentioned aspects, embodiments and/or the description as recited hereinbelow may be combined with one another.

### Brief description of the drawings

The structure, operation and advantages of the invention will become more apparent upon contemplation of the following description taken in conjunction with the accompanying drawings, wherein:
Figure 1 represents a perspective partial cross-section of a tire in accordance with an embodiment of the invention;
Figure 2 represents a schematic cross-section of a ply strip, e.g. an overlay ply strip, comprising schematically displayed cords in accordance with the invention; and
Figure 3 represents a schematic cross section of a cord for a tire ply or ply strip in accordance with an embodiment of the invention.

### Detailed description of the embodiments

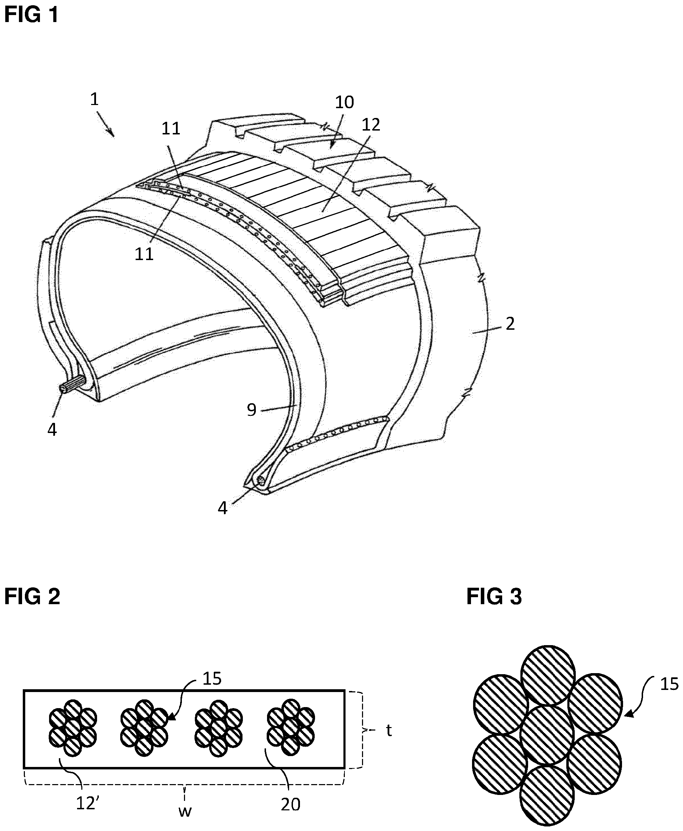

Figure 1 is a schematic perspective cross-section of a tire 1. The tire 1 has a tread 10, a belt structure comprising two belt plies 11, a carcass ply 9, two sidewalls 2, and two bead regions comprising beads 4. The example tire 1 is suitable, for example, for mounting on a rim of a vehicle, e.g. a passenger car. As mentioned already above, the term passenger car tire shall include also race car tires. As shown in Figure 1, the belt plies 11 may be covered by an overlay ply 12. The overlay ply 12 is schematically shown as a helically wound ply strip similar to strip 12' schematically shown in Figure 2. The overlay 12 may also be formed by multiple of such strips 12, 12'. In other words, one or more ply strips 12, 12' may be wound essentially in a circumferential direction, for instance with an angle of between 0 and 5 degrees with the equatorial plane of the tire (or, in other words, with respect to the circumferential centerline of the tire), covering the radially outermost belt ply 11 radially below the tread 10. The carcass ply 9 of Figure 1 includes a pair of axially opposite end portions, each of which is associated with a respective one of the beads 4. Each axial end portion of the carcass ply may be turned up and around the respective bead 4 to a position to anchor each axial end portion. One or more of the carcass plies 9, belt plies 11, overlay ply strip(s) 12, 12' comprise a rubber composition (such compositions are known in the tire art and are not within the focus of the present invention) and have a plurality of substantially parallel reinforcing members, or in other words textile cords, in accordance with an example of the invention. As further shown in Figure 1, the example tread 10 may have five circumferential grooves, each groove essentially defining a U-shaped opening in the tread 10. The main portion of the tread 10 may be formed of one or more tread compounds, which may be any suitable tread compound or compounds.

While the embodiment of Figure 1 suggests a plurality of tire components not all of those are mandatory for the invention. For instance, the turned-up ends of the carcass ply 9 are not necessary for the invention or may pass on the opposite sides of the respective beads 4 and terminate on the axially inner sides of the respective beads 4 instead of the axially outer side of the beads 4. The tire could also have for instance more or less than five grooves or even no grooves, as also possible in race car tires, e.g. slick tires. Moreover, the tire 1 shown in Figure 1 has two belt plies 11. However, it could have more belt plies 11, for instance three or four or even five or more belt plies. One belt ply is also an option.

The schematic cross-section of Figure 2 shows the ply strip 12', e.g. an overlay ply strip 12' which comprises a plurality of cords 15 reinforcing the rubber composition material 20. Typically, such a ply strip may be made in a fabric calendar unit in which a plurality of essentially parallel textile/fabric cords are coated from both sides with a layer or sheet of rubber composition 20. Such coating methods are well known to the person skilled in the art of tire building. After curing, the cords 15 are embedded in the rubber composition 20, reinforcing the same.

In general, cords 15 may be coated with dips and/or adhesives (or may be free of such materials) for better adhesion properties with regards to adhesion of the cords 15 to the rubber composition or matrix 20. Neither a dip nor an adhesive coating is shown in Figure 2.

While the schematic drawing of Figure 2 indicates four cords 15 according to an embodiment of the invention, the number of parallel cords per ply strip could be different, for instance between 2 and 10. A preferred ends per 2.54 cm (epi) value could be between 10 and 40 epi, in particular 30 epi. The width w of the ply strip 12' may be for instance in general in the range from 3 to 15 mm, preferably from 4 to 15 mm. The thickness t could be for instance in the range from 0.5 to 3 mm. In general, the width w of the strip 12' (essentially in parallel to the axial direction of the tire) is larger than the thickness t of the strip 12' (essentially measured in the radial direction of the tire). The cords 15 extend in parallel to the length of the strip 12' (essentially perpendicular to the width w and thickness direction t). Ends per 2.54 cm can be suitably measured in parallel to the width and perpendicular to the length of a strip or perpendicular the direction of extension of the cords.

Figure 3 discloses a schematic cross section of a cord 15 comprising seven polyamide monofilament plies (or in other words monofilament fibers or just monofilaments). Although it may seem at a first glance that the cord 15 has a core monofilament ply, it is emphasized that all 7 monofilament plies are twisted together. The cord 15 does not have a core or central monofilament ply with other monofilaments plies wrapped around such a central core. In contrast, the seven monofilament plies are twisted around each other to form the cord 15 within the scope of an embodiment of the present invention.

Variations in the present invention are possible in light of the provided description. While certain representative embodiments, examples and details have been shown for the purpose of illustrating the subject invention, it will be apparent to those skilled in this art that various changes and modifications can be made therein without departing from the scope of the invention. It is, therefore, to be understood that changes may be made in the particular example embodiments described which will be within scope of the invention as defined by the appended claims.

Optionally, the terms "tire ply" and "ply strip" may also be considered as "tire cap ply" (or just "cap ply") and "cap ply strip", respectively.

In any case, the above described embodiments and examples shall not be understood in a limiting sense. The scope of the invention is limited by the appended claims.

## Claims

1. A tire overlay ply strip (12, 12') comprising a cord (15), the cord (15) comprising from 6 to 10 polyamide monofilament plies having each a density from 300 to 470 dtex, wherein the monofilament plies are twisted together by between 1 and 2 twists per 2.54 cm to form the cord (15).

2. The overlay ply strip according to claim 1, wherein the cord (15) comprises from 7 to 9 monofilament plies, optionally 7 monofilament plies.

3. The overlay ply strip according to claim 1 or 2, wherein each monofilament ply has a density from 400 to 460 dtex.

4. The overlay ply strip according to one or more of the preceding claims, wherein the monofilament plies are twisted together by between 1 and 1.5 twists per 2.54 cm, optionally by less than 1.4 twists per 2.54 cm.

5. The overlay ply strip according to one or more of the preceding claims, wherein the polyamide is Nylon, optionally Nylon 66.

6. The overlay ply strip according to one or more of the preceding claims, wherein the monofilament plies have an essentially circular cross section.

7. The overlay ply strip according to one or more of the preceding claims, wherein the diameter of each monofilament ply is between 0.15 mm and 0.3 mm.

8. The overlay ply strip according to one or more of the preceding claims, wherein the maximum diameter of the cord (15) is less than 0.7 mm.

9. The overlay ply strip according to one or more of the preceding claims, wherein the cord (15) is coated with an adhesive, optionally with a resorcinol-formaldehyde-latex adhesive.

10. The overlay ply strip according to one or more of the preceding claims, wherein the cord (15) has a construction of 460/7 dtex Nylon with 1.1 to 1.4 twists per 2.54 cm.

11. A passenger car tire (1) comprising:
a carcass comprising at least one carcass ply (9);
a tread (10) disposed radially outward of a crown region of the carcass (9);
a belt with a plurality of belt plies (11) arranged between the carcass (9) and the tread (10);
an overlay structure covering the belt and comprising an overlay ply strip (12, 12') according to one or more of the preceding claims, wherein the overlay ply strip (12, 12') is helically wound and reinforced by at least one cord (15).

12. The passenger car tire according to claim 11, wherein the tire (1) is one or more of:
a pneumatic tire; a race tire; a tire approved to drive faster than 300 km/h; a slick tire or a semi slick tire;
and/or has one of a speed index of "W", a speed index of "Y", and a speed index of "(Y)".

13. The passenger car tire according to claim 11 or 12, wherein the helically wound overlay ply strip (12, 12') extends over the belt plies (11) at an angle of between 0 and 5 degrees with respect to the equatorial plane of the tire (1).

14. The passenger car tire according one or more of claims 11 to 13, wherein the overlay ply strip (12, 12') has between 10 and 50 ends per 2.54 cm.

15. The passenger car tire according one or more of claims 11 to 14, wherein said overlay ply strip (12, 12') has one or more of: a width (w) in the range of 5 mm to 20 mm, and a thickness (t) in the range of 0.4 mm to 4 mm.

## Patentansprüche

1. Reifenüberlagerungslagenstreifen (12, 12'), der einen Kord (15) umfasst, wobei der Kord (15) 6 bis 10 Polyamidmonofilamentlagen mit jeweils einer Dichte von 300 bis 470 dtex umfasst, wobei die Monofilamentlagen durch zwischen 1 und 2 Drehungen pro 2,54 cm miteinander verdreht sind, um den Kord (15) zu bilden.

2. Überlagerungslagenstreifen nach Anspruch 1, wobei der Kord (15) von 7 bis 9 Monofilamentlagen, optional 7 Monofilamentlagen, umfasst.

3. Überlagerungslagenstreifen nach Anspruch 1 oder 2, wobei jede Monofilamentlage eine Dichte von 400 bis 460 dtex hat.

4. Überlagerungslagenstreifen nach einem oder mehreren der vorhergehenden Ansprüche, wobei die Monofilamentlagen durch zwischen 1 bis 1,5 Drehungen pro 2,54 cm, optional durch weniger als 1,4 Windungen pro 2,54 cm miteinander verdreht sind.

5. Überlagerungslagenstreifen nach einem oder mehreren der vorhergehenden Ansprüche, wobei das Polyamid Nylon, optional Nylon 66, ist.

6. Überlagerungslagenstreifen nach einem oder mehreren der vorhergehenden Ansprüche, wobei die Monofilamentlagen einen im Wesentlichen kreisförmigen Querschnitt aufweisen.

7. Überlagerungslagenstreifen nach einem oder mehreren der vorhergehenden Ansprüche, wobei der Durchmesser jeder Monofilamentlage zwischen 0,15 mm und 0,3 mm liegt.

8. Überlagerungslagenstreifen nach einem oder mehreren der vorhergehenden Ansprüche, wobei der maximale Durchmesser des Kordes (15) weniger als 0,7 mm beträgt.

9. Überlagerungslagenstreifen nach einem oder mehreren der vorhergehenden Ansprüche, wobei der Kord (15) mit einem Klebstoff, optional mit einem Resorcin-Formaldehyd-Latex-Klebstoff beschichtet ist.

10. Überlagerungslagenstreifen nach einem oder mehreren der vorhergehenden Ansprüche, wobei der Kord (15) einen Aufbau aus 460/7 dtex Nylon mit 1,1 bis 1,4 Drehungen pro 2,54 cm hat.

11. Pkw-Reifen (1) umfassend:
eine Karkasse, die mindestens eine Karkassenlage (9) umfasst;
eine Lauffläche (10), die radial nach außerhalb eines Zenitbereichs der Karkasse (9) angeordnet ist;
einen Gürtel, der mehrere zwischen der Karkasse (9) und der Lauffläche (10) angeordnete Gürtellagen (11) umfasst;
eine den Gürtel abdeckende und einen Überlagerungslagenstreifen (12, 12') nach einem oder mehreren der vorhergehenden Ansprüche umfassende Überlagerungsstruktur, wobei der Überlagerungslagenstreifen (12, 12') schraubenförmig gewickelt und durch mindestens einen Kord (15) verstärkt ist.

12. Pkw-Reifen nach Anspruch 11, wobei der Reifen (1) eines oder mehrere von:
einem Luftreifen; einem Rennreifen; einem Reifen, der für eine Geschwindigkeit von mehr als 300 km/h zugestimmt ist; einem Slick- oder einem Semi-Slick-Reifen ist;
und/oder einen Geschwindigkeitsindex von "W", einen Geschwindigkeitsindex von "Y" und einen Geschwindigkeitsindex von "(Y)" hat.

13. Pkw-Reifen nach Anspruch 11 oder 12, wobei der schraubenförmig gewickelte Überlagerungslagenstreifen (12, 12') sich unter einem Winkel zwischen 0 und 5 Grad in Bezug auf die äquatorialen Ebene des Reifens (1) über die Gürtellagen (11) erstreckt.

14. Pkw-Reifen nach einem oder mehreren der Ansprüche 11 bis 13, wobei der Überlagerungslagenstreifen (12, 12') zwischen 10 und 50 Enden pro 2,54 cm hat.

15. Pkw-Reifen nach einem oder mehreren der Ansprüche 11 bis 14, wobei der Überlagerungslagenstreifen (12, 12') eines oder mehrere von: einer Breite (w) im Bereich von 5 mm bis 20 mm und einer Dicke (t) im Bereich von 0,4 mm bis 4 mm hat.

## Revendications

1. Bande de nappe de protection de bandage (12, 12') qui comprend un câblé (15), le câblé (15) comprenant de 6 à 10 nappes de monofilaments en polyamide possédant chacune une densité de 300 à 470 dtex, dans laquelle les nappes de monofilaments sont torsadées les unes aux autres à l'intervention d'un nombre de torsions entre 1 et 2 torsions par 2,54 cm afin d'obtenir le câblé (15).

2. Bande de nappe de protection selon la revendication 1, dans laquelle le câblé (15) comprend 7 à 9 nappes de monofilaments, de manière facultative 7 nappes de monofilaments.

3. Bande de nappe de protection selon la revendication 1 ou 2, dans laquelle chaque nappe de monofilaments possède une densité de 400 à 460 dtex.

4. Bande de nappe de protection selon une ou plusieurs des revendications précédentes, dans laquelle les nappes de monofilaments sont torsadées les unes aux autres à l'intervention d'un nombre de torsions entre 1 et 1,5 torsion par 2,54 cm, de manière facultative, à l'intervention d'un nombre inférieur à 1,4 torsion par 2,54 cm.

5. Bande de nappe de protection selon une ou plusieurs des revendications précédentes, dans laquelle le polyamide est du nylon, de manière facultative du nylon 66.

6. Bande de nappe de protection selon une ou plusieurs des revendications précédentes, dans laquelle les nappes de monofilaments possèdent une section transversale essentiellement de forme circulaire.

7. Bande de nappe de protection selon une ou plusieurs des revendications précédentes, dans laquelle le diamètre de chaque nappe de monofilaments se situe entre 0,15 mm et 0,3 mm.

8. Bande de nappe de protection selon une ou plusieurs des revendications précédentes, dans laquelle le diamètre maximal du câblé (15) est inférieur à 0,7 mm.

9. Bande de nappe de protection selon une ou plusieurs des revendications précédentes, dans laquelle le câblé (15) est enduit d'un adhésif, de manière facultative d'un adhésif d'un latex de résorcinol-formaldéhyde.

10. Bande de nappe de protection selon une ou plusieurs des revendications précédentes, dans laquelle le câblé (15) possède une structure de 460/7 dtex de nylon avec 1,1 à 1,4 torsion par 2,54 cm.

11. Bandage (1) pour un véhicule de tourisme comprenant :
une carcasse qui comprend au moins une nappe de carcasse (9) ;
une bande de roulement (10) qui est disposée en direction radiale à l'extérieur d'une zone de sommet de la carcasse (9) ;
une ceinture comprenant un certain nombre de nappes de ceintures (11) qui sont disposées entre la carcasse (9) et la bande de roulement (10) ;
une structure de protection qui recouvre la ceinture et qui comprend une bande de nappe de protection (12, 12') en conformité avec une ou plusieurs des revendications précédentes ; dans lequel la bande de nappe de protection (12, 12') est enroulée de manière hélicoïdale et est renforcée par au moins un câblé (15).

12. Bandage pour un véhicule de tourisme selon la revendication 11, dans lequel le bandage (1) représente un ou plusieurs de ceux indiqués ci-après, à savoir :
un bandage pneumatique ; un bandage pneumatique de course ; un bandage qui a été approuvé pour rouler à des vitesses supérieures à 300 km/heure ; un bandage lisse ou un bandage semi-lisse ;
et/ou possède un indice de vitesse choisi parmi un indice de vitesse de « W », un indice de vitesse de « Y » ou au un indice de vitesse de « (Y) ».

13. Bandage pour un véhicule de tourisme selon la revendication 11 ou 12, dans lequel la bande de nappe de protection (12, 12') enroulée de manière hélicoïdale s'étend par-dessus les nappes de ceintures (11) en formant un angle entre 0 et 5 degrés par rapport au plan équatorial du bandage (1).

14. Bandage pour un véhicule de tourisme selon une ou plusieurs des revendications 11 à 13, dans lequel la bande de nappe de protection (12, 12') possède entre 10 et 50 bouts par 2,54 cm.

15. Bandage pour un véhicule de tourisme selon une ou plusieurs des revendications 11 à 14, dans lequel ladite bande de nappe de protection (12, 12') possède une ou plusieurs des caractéristiques choisies parmi : une largeur (w) dans la plage de 5 mm à 25 mm et une épaisseur (t) dans la plage de 0,4 mm à 4 mm.
